(19) Europäisches Patentamt / European Patent Office / Office européen des brevets

(11) **EP 3 628 098 B1**

(12) **EUROPEAN PATENT SPECIFICATION**

(45) Date of publication and mention
of the grant of the patent:
**17.03.2021 Bulletin 2021/11**

(21) Application number: **17929608.2**

(22) Date of filing: **24.10.2017**

(51) Int Cl.:
*G10L 15/02* (2006.01)          *G10L 15/14* (2006.01)
*G10L 15/08* (2006.01)

(86) International application number:
**PCT/CN2017/107432**

(87) International publication number:
**WO 2019/079957 (02.05.2019 Gazette 2019/18)**

(54) **SYSTEM AND METHOD FOR KEY PHRASE SPOTTING**

SYSTEM UND VERFAHREN ZUR ERKENNUNG VON SCHLÜSSELPHRASEN

SYSTÈME ET PROCÉDÉ DE REPÉRAGE D'EXPRESSIONS CLÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.04.2020 Bulletin 2020/14**

(73) Proprietor: **Beijing Didi Infinity Technology and
Development Co., Ltd.
Beijing 100193 (CN)**

(72) Inventor: **ZHOU, Rong
Beijing 100193 (CN)**

(74) Representative: **Wang, Bo
Panovision IP
Ebersberger Straße 3
85570 Markt Schwaben (DE)**

(56) References cited:
CN-A- 1 452 156          CN-A- 102 194 454
CN-A- 103 677 729        CN-A- 104 700 832
JP-A- 2010 078 877       US-A- 5 613 037
US-A1- 2010 211 390      US-A1- 2015 325 240
US-A1- 2016 125 873

• SUDOH K ET AL: "Post-dialogue recognition
confidence scoring for improving statistical
language models using untranscribed dialogue
data", AUTOMATIC SPEECH RECOGNITION AND
UNDERSTANDING, 2003. ASRU '03. 2003 I EEE
WORKSHOP ON ST. THOMAS, VI, USA NOV.
30-DEC. 3, 2003, PISCATAWAY, NJ, USA,IEEE, 30
November 2003 (2003-11-30), pages 447-452,
XP010713328, DOI: 10.1109/ASRU.2003.1318482
ISBN: 978-0-7803-7980-0

## Description

## FIELD OF THE INVENTION

This disclosure generally relates to approaches and techniques for key phrase spotting in speech recognition.

## BACKGROUND

Advances in human-machine interactions can allow people to use their voices to effectuate control of machines. For example, command triggering based on traditional instruction inputs such as keyboard, mouse, or touch screen can be achieved by voice inputs. An exemplary approach of controlling devices using speech commands is disclosed in US 2015/0325240 A1. Nevertheless, many hurdles are yet to be overcome to streamline the process.

## SUMMARY

Various embodiments of the present disclosure include systems, methods, and non-transitory computer readable medium for key phrase spotting. A method for key phrase spotting according to the invention, implemented on a computing device having at least one processor and at least one computer-readable storage medium, comprises: obtaining an audio comprising a sequence of audio portions; obtaining a plurality of candidate words corresponding to a plurality of the audio portions and obtaining a first probability score for each corresponding relationship between the obtained candidate word and the audio portion; determining if the plurality of candidate words respectively match a plurality of key words of a key phrase and if the first probability score of each of the plurality of candidate words exceeds a corresponding first threshold, the plurality of candidate words constituting a candidate phrase; in response to determining the plurality of candidate words matching the plurality of key words and the first probability score of each of the plurality of candidate words exceeding the corresponding threshold, obtaining a second probability score representing a matching relationship between the candidate phrase and the key phrase based on the first probability score of each of the plurality of candidate words; and in response to determining the second probability score exceeding a second threshold, determining the candidate phrase as the key phrase.

In some embodiments, the method may be implementable by a mobile device comprising a microphone, a processor, and a non-transitory computer-readable storage medium storing instructions. For example, the microphone may be configured to receive the audio, and the instructions, when executed by the processor, cause the processor to perform the method. The obtained audio may comprise a speech recorded by the microphone of one or more occupants in a vehicle. The mobile device may comprise a mobile phone.

In some embodiments, obtaining the plurality of candidate words corresponding to a plurality of the audio portions and obtaining a first probability score for each corresponding relationship between the obtained candidate word and the audio portion may comprise obtaining a spectrogram corresponding to the audio, obtaining a feature vector for each time frame along the spectrogram to obtain a plurality of feature vectors corresponding to the spectrogram, obtaining a plurality of language units corresponding to the plurality of feature vectors, obtaining a sequence of candidate words corresponding to the audio based at least on a lexicon mapping language units to words, and for the each candidate word, obtaining the first probability score based at least on a model trained with sample sequences of language units, and obtaining the plurality of candidate words from the sequence of candidate words.

In some embodiments, the method may further comprise determining a starting time and an end time of the key phrase in the obtained audio based at least on the time frame.

In some embodiments, the plurality of candidate words may be in chronological order (that is, consecutive words obtained from the sequence of candidate words and in the same word sequence), and the respective match between the plurality of candidate words and the plurality of key words may comprise a match between a candidate word in a sequential order in the candidate phrase and a key word in the same sequential order in the key phrase.

In some embodiments, determining if the plurality of candidate words respectively match the plurality of key words of the key phrase and if the first probability score of each of the plurality of candidate words exceeds the corresponding first threshold may comprise determining, in a forward or backward sequential order, the respective match between the plurality of candidate words and the plurality of key words.

In some embodiments, the method may further comprise, in response to determining the first probability score of any of the plurality of candidate words not exceeding the corresponding threshold, not determining the candidate phrase as the key phrase.

In some embodiments, the method may not be implemented based on or partially based on a language model, and the method may not be implemented by or partially by a voice decoder.

In some embodiments, the method may be implementable to spot a plurality of key phrases from the audio, and the plurality of key phrases may comprise at least one of a phrase for awakening an application, a phrase of a standardized language, or an emergency triggering phrase. A system and a non-transitory computer-readable medium according to the invention are defined in claims 10 and 15, respectively.

These and other features of the systems, methods, and non-transitory computer readable media disclosed herein, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for purposes of illustration and description only and are not intended as a definition of the limits of the invention.

**BRIEF DESCRIPTION OF THE DRAWINGS**

Certain features of various embodiments of the present technology are set forth with particularity in the appended claims. A better understanding of the features and advantages of the technology will be obtained by reference to the following detailed description that sets forth illustrative embodiments, in which the principles of the invention are utilized, and the accompanying drawings of which:

FIGURE 1 illustrates an example environment for key phrase spotting, in accordance with various embodiments.

FIGURE 2 illustrates an example system for key phrase spotting, in accordance with various embodiments.

FIGURES 3A-3B illustrates an example method for key phrase spotting, in accordance with various embodiments.

FIGURES 4A-4B illustrate flowcharts of an example method for key phrase spotting, in accordance with various embodiments.

FIGURE 5 illustrates a block diagram of an example computer system in which any of the embodiments described herein may be implemented.

**DETAILED DESCRIPTION**

Voice control can be implemented in various situations to facilitate user control. For example, vehicle service platforms that coordinate transportation providers (e.g., drivers) and service requestors (e.g., passengers) via software Applications installed on mobile phones can improve the services by incorporating voice control to the Applications. In one example, a driver's speeches can be monitored to determine if he complies with standardized language requirements in the scope of the job. In another example, vehicle occupants can speak a preset key phrase to trigger machine detection of a command to execute. In yet another example of an emergency situation, vehicle occupants can call for help by speaking certain SOS type phrases, causing machines to detect and recognize the SOS phrase and trigger an alert. In such examples, speech recognition is the basis for detecting and converting human speeches to machine languages, and key phrase spotting is underlying for the machine to identify a part of a streamed speech that is associated with a significant meaning. To enhance the reliability of speech recognition, it is desirable to improve the true acceptance rate (i.e., recognition of the key phrase when it is spoken) and lower the false acceptance rate (i.e., recognition of the key phrase when it is not spoken) for key phrase spotting.

In various implementations, a computing system may be configured to spot a key phrase consisting of a plurality of words (e.g., words w1, w2, w3, and w4 in the order from w1 to w4 in the key phrase). Current technologies would determine a candidate phrase consisting of four candidate words and probabilities p1, p2, p3, and p4 respectively indicating how likely the candidate words matches the key words, and only compare an overall probability for the candidate phrase

$$\sqrt{p1p2p3p4}$$ with a preset threshold to determine if the candidate phrase is the key phrase. Such method may lead to higher false acceptance rate. For example, if the first, second, and fourth candidate words highly match w1, w2, and w4 respectively, such that the overall probability exceeds the preset threshold, the key phrase would be falsely determined even if the third candidate word does not match w3 and p3 is very low. For another example, a candidate phrase may comprise the same words as the key words, but in a different sequential order. Since the overall probability does not account for the word order, such instances of candidate phrase would also lead to false acceptance.

A claimed solution rooted in computer technology can overcome problems arising in the realm of key phrase spotting. A computer system may gauge probabilities for individual candidate words in addition to determining the overall probability for key phrase spotting. In the four-word key phrase example, a computing system may screen the individual probability of each candidate word (p1, p2, p3, p4) by comparing with a corresponding threshold. If any probability of p1, p2, p3, and p4 fails to exceed the corresponding threshold, the candidate phrase would not be determined as the key phrase, thus lowering the false acceptance rate and increasing the true acceptance rate. Further, the computing system may account for the word order for key phrase spotting. The computer system may be configured to compute a following word's probability, subject to a preceding word's probability. For example, the determination of p3 may be conditioned on or may not be performed until determining p2 exceeding its threshold associated with a second word in the key phrase, thus eliminating false acceptance of phrases such as w1w2w4w3.

Various embodiments of the present disclosure include systems, methods, and non-transitory computer readable medium for key phrase spotting. An exemplary method for key phrase spotting, implemented on a computing device having at least one processor and at least one computer-readable storage medium, may comprise: obtaining an audio comprising a sequence of audio portions; obtaining a plurality of candidate words corresponding to a plurality of the audio portions and obtaining a first probability score for each corresponding relationship between the obtained candidate word and the audio portion; determining if the plurality of candidate words respectively match a plurality of key words of a key phrase and if the first probability score of each of the plurality of candidate words exceeds a corresponding first threshold, the plurality of candidate words constituting a candidate phrase; in response to determining the plurality of candidate words matching the plurality of key words and the first probability score of each of the plurality of candidate words exceeding the corresponding threshold, obtaining a second probability score representing a matching relationship between the candidate phrase and the key phrase based on the first probability score of each of the plurality of candidate words; and in response to determining the second probability score exceeding a second threshold, determining the candidate phrase as the key phrase.

In some embodiments, the method may be implementable by a mobile device comprising a microphone, a processor, and a non-transitory computer-readable storage medium storing instructions. For example, the microphone may be configured to receive the audio, and the instructions, when executed by the processor, cause the processor to perform the method. The obtained audio may comprise a speech recorded by the microphone of one or more occupants in a vehicle. The mobile device may comprise a mobile phone.

In some embodiments, obtaining the plurality of candidate words corresponding to a plurality of the audio portions and obtaining a first probability score for each corresponding relationship between the obtained candidate word and the audio portion may comprise obtaining a spectrogram corresponding to the audio, obtaining a feature vector for each time frame along the spectrogram to obtain a plurality of feature vectors corresponding to the spectrogram, obtaining a plurality of language units corresponding to the plurality of feature vectors, obtaining a sequence of candidate words corresponding to the audio based at least on a lexicon mapping language units to words, and for the each candidate word, obtaining the first probability score based at least on a model trained with sample sequences of language units, and obtaining the plurality of candidate words from the sequence of candidate words.

In some embodiments, the method may further comprise determining a starting time and an end time of the key phrase in the obtained audio based at least on the time frame.

In some embodiments, the plurality of candidate words may be in chronological order (that is, consecutive words obtained from the sequence of candidate words and in the same word sequence), and the respective match between the plurality of candidate words and the plurality of key words may comprise a match between a candidate word in a sequential order in the candidate phrase and a key word in the same sequential order in the key phrase.

In some embodiments, determining if the plurality of candidate words respectively match the plurality of key words of the key phrase and if the first probability score of each of the plurality of candidate words exceeds the corresponding first threshold may comprise determining, in a forward or backward sequential order, the respective match between the plurality of candidate words and the plurality of key words.

In some embodiments, the method may further comprise, in response to determining the first probability score of any of the plurality of candidate words not exceeding the corresponding threshold, not determining the candidate phrase as the key phrase.

In some embodiments, the method may not be implemented based on or partially based on a language model, and the method may not be implemented by or partially by a voice decoder.

In some embodiments, the method may be implementable to spot a plurality of key phrases from the audio, and the plurality of key phrases may comprise at least one of a phrase for awakening an application, a phrase of a standardized language, or an emergency triggering phrase. The embodiments can be implemented in various scenarios, such as when walking, hailing vehicle, driving vehicle, riding vehicle, and so on, especially when typing is unrealistic or inconvenient. For example, to monitor if a vehicle driver complies with standardized service language, a computing system such as a mobile phone or a vehicle-based computer may monitor the driver's speeches during conversation with customers. For another example, a user can say a query sentence to a mobile phone (e.g., "XYZ, get me a ride to metro center"), causing an Application to be awakened by the key phrase "XYZ" and recognize the command "get me a ride to metro center." In yet another example, a passenger's mobile phone may capture a speech asking for help (e.g., "help," "call 911") and transmit an alert to appropriate parties (e.g., a closest police patrol car, a police station, a hospital, a relative of the passenger). Thus, even if the passenger is embroiled in a fight, struggling to survive, or otherwise unable to dial 911 or type a message, appropriated parties can be alerted to rescue.

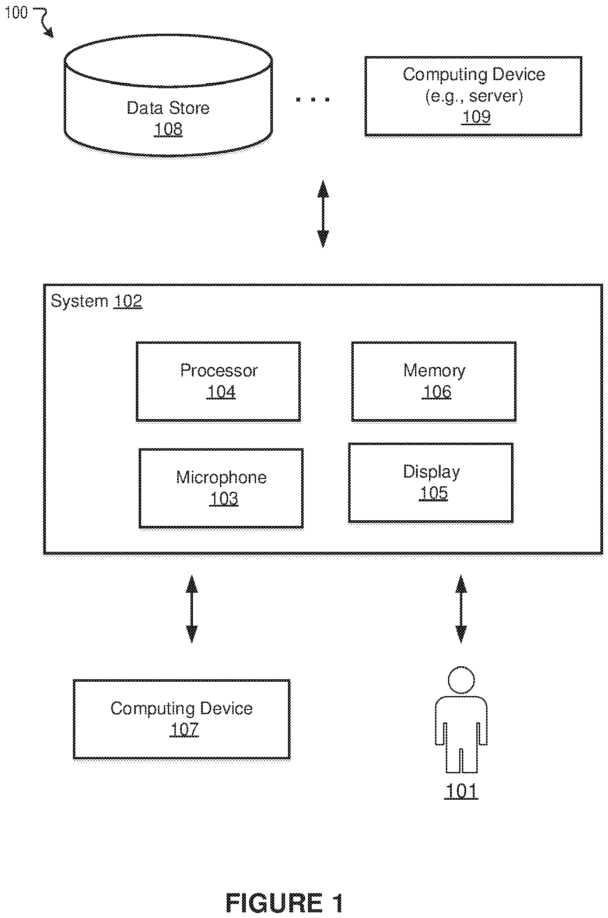

FIG. 1 illustrates an example environment 100 for key phrase spotting, in accordance with various embodiments. As shown in FIG. 1, the example environment 100 can comprise at least one computing system 102 that includes one or more processors 104 and memory 106. The memory 106 may be non-transitory and computer-readable. The memory 106 may store instructions that, when executed by the one or more processors 104, cause the one or more processors 104 to perform various operations described herein. The system 102 may further comprise a microphone 103 configured to capture and record audio inputs (e.g., human speeches or voices). Here, any other alternative audio capturing device may be used as the microphone 103. The audio inputs may be captured from a computing device 107 or a user 101. The computing device 107 (e.g., cellphone, tablet, computer, wearable device (smart watch)) may transmit and/or play information (e.g., a recorded audio) to the system 102. The user 101 may speak within the detection range of the microphone 103 for the audio capture. Optionally, the system 102 may further comprise a display 105 configured to display information (e.g., texts of speeches recognized by the system 102 and/or the computing device 109). The display 105 may comprise a touch screen. The system 102 may be implemented on or as various devices such as mobile phone, tablet, computer, wearable device (smart watch), etc. The system 102 above may be installed with appropriate software (e.g., Application, platform program, etc.) and/or hardware (e.g., wires, wireless connections, etc.) to access other devices of the environment 100.

The environment 100 may include one or more data stores (e.g., a data store 108) and one or more computing devices (e.g., a computing device 109) that are accessible to the system 102. In some embodiments, the system 102 may be configured to exchange data or information with the data store 108 and/or the computing device 109. For example, the data store 108 may be installed in a computer for storing address information. The computing device 109 may be a server configured to perform speech recognition. The server may be configured to receive audio inputs from the system 102 and apply various models (e.g., Hidden Markov Model, dynamic time warping-based speech recognition, neural network) to the audio inputs to recognize one or more speeches and obtain texts corresponding to the speeches. The speech recognition performed at the computing device 109 may be more comprehensive than the speech recognition performed at the system 102 due to the greater computing power. For applications described herein, the key phrase spotting may be performed at the system 102, and in some cases, in response to spotting the key phrase spotting, one or more speeches may be transmitted to the computing device 109 for further speech recognition.

In some embodiments, the data store 108 and/or the computing device 109 may implement an online information or service platform. The service may be associated with vehicles (e.g., cars, bikes, boats, airplanes, etc.), and the platform may be referred to as a vehicle (service) hailing platform. The platform may accept requests for transportation, identify vehicles to fulfill the requests, arrange for pickups, and process transactions. For example, a user may use the system 102 (e.g., a mobile phone installed with an Application associated with the platform) to submit transportation requests to the platform. The computing device 109 may receive and post the transportation requests. A vehicle driver may use the system 102 (e.g., another mobile phone installed with the Application associated with the platform) to accept the posted transportation requests and obtain pickup location information and information of the user. Some platform data (e.g., vehicle information, vehicle driver information, address information, etc.) may be stored in the memory 106 or retrievable from the data store 108 and/or the computing device 109. As described herein, the system 102 for key phrase spotting may be associated with a person or a vehicle (e.g., carried by a driver, carried by a passenger, used by a person not associated with a vehicle, installed in a vehicle) or otherwise capable of capture speeches of people accessing the platform.

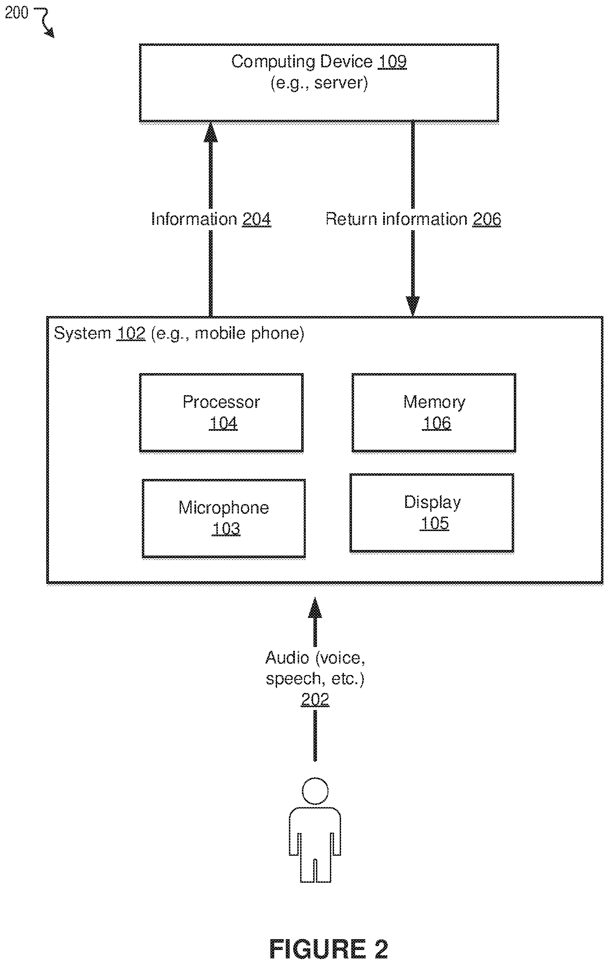

In some embodiments, the system 102 and one or more of the computing devices (e.g., the computing device 109) may be integrated in a single device or system. Alternatively, the system 102 and the computing devices may operate as separate devices. The data store(s) may be anywhere accessible to the system 102, for example, in the memory 106, in the computing device 109, in another device (e.g., network storage device) coupled to the system 102, or another storage location (e.g., cloud-based storage system, network file system, etc.), etc. Although the system 102 and the computing device 109 is shown as single components in this figure, it is appreciated that the system 102 and the computing device 109 can be implemented as single devices or multiple devices coupled together. The computing device may couple to and interact with multiple systems like the system 102. In general, the system 102, the computing device 109, and the data store 108 may be able to communicate with one another through one or more wired or wireless networks (e.g., the Internet) through which data can be communicated. Various aspects of the environment 100 are described below in reference to **FIG. 2** to **FIG. 5.**

**FIG. 2** illustrates an example system 200 for key phrase spotting, in accordance with various embodiments. The operations shown in **FIG. 2** and presented below are intended to be illustrative. The various devices and components in **FIG.** 2 are similar to those described in **FIG. 1,** except that the data store 108 and the computing device 107 are removed for simplicity.

In various embodiments, the system 102 may be implemented on a mobile device including a mobile phone. One or more components of the system 102 (e.g., the microphone 108, the processor 104, and/or the memory 106) may be configured to receive an audio (e.g., an audio 202) and store the audio in an audio queue (e.g., as a file in the memory 106). The key phrase spotting method described herein may be performed to the audio queue, while the audio is continuously streamed, or may be performed to the audio queue after the streaming is completed. The audio 202 may comprise a speech (e.g., sentences, phrases, words) spoken by a human. The speech can be in any language. The processor 104 may be configured to control the start and stop of the recording. For example, when entering a preset interface of an Application installed on the system 102 or opening the Application as described above, the recording may start. The processor 104 may control an analogue to digital signal converter (ADC) of the system 102 (not shown in this figure) to convert the captured audio into digital format and store in the audio queue. The audio queue may be associated with time and may comprise time-series data of the captured audio. The audio queue may be stored in various audio file formats (e.g., a WAV file). The audio queue may be stored in the memory 106, in a cache, or another storage medium. The audio queue may not be limited to a particular operating system, and various alternative audio buffer, audio cache, audio streaming, or audio callback techniques can be used in place of the audio queue. The audio queue may be optionally configured to capture only the latest audio (e.g., the last minute of audio capture, the last 1G audio file, audio captured in a day). For example, the captured audio may be continuously streamed to a cache of a limited size, and the latest audio portion in excess of the limit is written over the oldest audio portion.

In some embodiments, one or more components of the system 102 (e.g., the processor 104 and/or the memory 106) may be configured to monitor the audio queue to spot one or more key phrases. In response to spotting the key phrase, the processor 104 and/or the memory 106 may be configured to optionally transmit information 204 to the computing device 109. For example, in response to spotting an awakening phrase by the system 102, a function of an Application on the system 102 may be triggered to obtain an audio segment from the audio queue, and the Application may transmit the obtained audio segment as the information 204 to the computing device 109 for speech recognition. For another example, the system 102 may capture speeches for a duration (e.g., the driver's speeches in a day) and transmit the speeches as the information 204 to the computing device 109 for speech recognition. The speech recognition can be used to determine how well the driver's captured speeches complied with the standard. For yet another example, the system 102 may monitor the captured audio in real-time (e.g., every few milliseconds), spot the key phrase (e.g., a standardized phrase, an emergency call for help), and transmit the information 204 (e.g., an indication that the language standard is complied with, an alert for emergency) to the computing device 109. The computing device 109 may be associated with appropriate parties, such as driver performance evaluators, customer service personnel, rescuers, police, etc.

In some embodiments, the computing device 109 may return information 206 (e.g., texts of speeches recognized by the computing device 109) to the system 102. The display 105 of the system 102 may be configured to display the returned information.

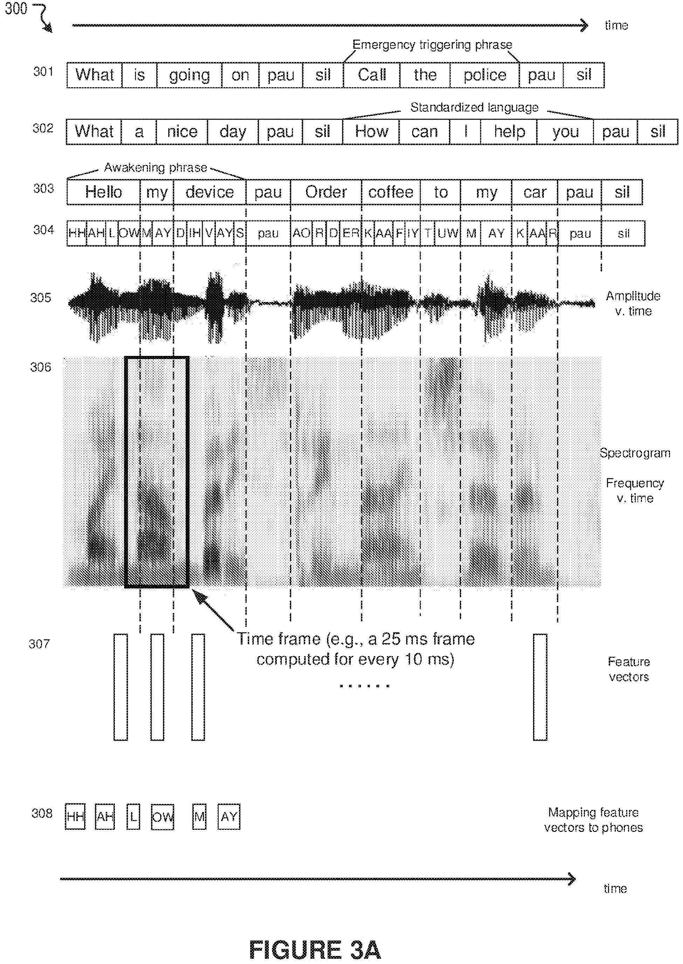

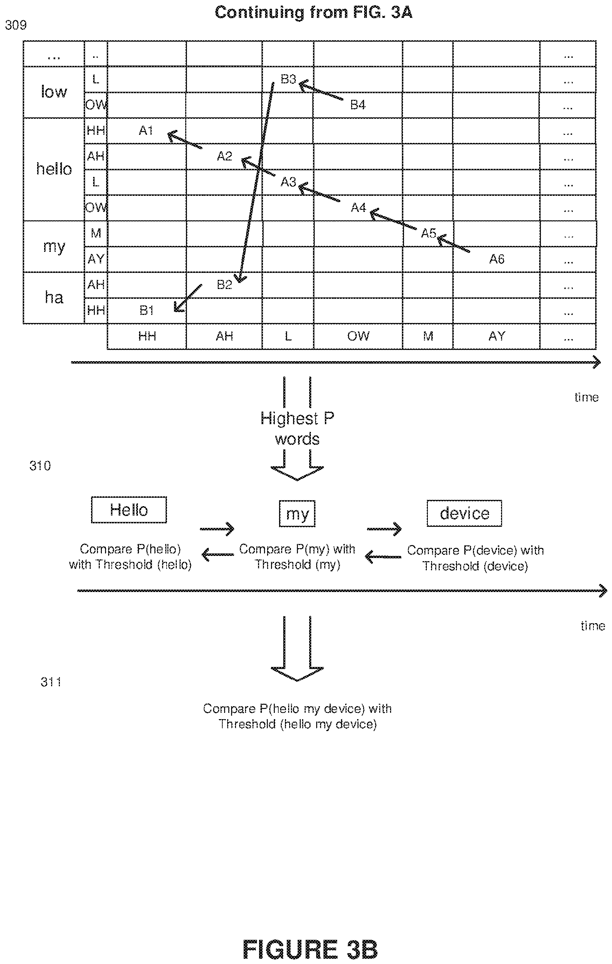

**FIGs. 3A and 3B** illustrate an example method 300 for key phrase spotting, in accordance with various embodiments. The method 300 may be implemented in various environments including, for example, the environment 100 of **FIG. 1**. The example method 300 may be implemented by one or more components of the system 102 (e.g., the processor 104, the memory 106). The operations of the method 300 presented below are intended to be illustrative. Depending on the implementation, the example method 300 may include additional, fewer, or alternative steps performed in various orders or in parallel.

In some embodiments, audio queues 301-303 may represent example audios captured by the system 102. The audio queues are labelled with corresponding blocks of speech words, pauses (pau), or silences (sil) in a continuous time series in the x-axis direction. As shown below from the step 305, these labels are to be determined from the captured audio. Some of the speech words may be key words of key phrases. For example, in the audio queue 301, "call the police" is the key phrase to be spotted to trigger an emergency alert. In the audio queue 302, "how can I help you" is the standardized language to be detected, which can be used to score the service provided by the driver. In the audio queue 303, "hello my device" is an awakening phrase for triggering an Application, a process, or a function. Upon detecting this awakening phrase, the system 102 may capture the next following sentence (e.g., "order coffee to my car"). The system 102 may recognize this sentence and execute based on the query (e.g., by placing a delivery order of coffee with a merchant and providing the car's location). Alternatively, the system 102 may transmit the sentence's audio to the computing device 109, causing the computing device 109 to recognize the sentence and execute based on the query. Like other key phrases, the awakening phrase can comprise one or more words. The awakening phrase may comprise a name or greeting (e.g., "Hello XYZ," "Ok XYZ," "XYZ," "Hello my device") and may be associated with an application, program, function, process, or device (e.g., application XYZ, my device). Here, "awakening" does not necessarily imply awakening from a "sleeping mode." Before the "awakening," the system 102 may be sleeping, idle, or performing other tasks.

The following exemplary steps and illustrations with reference to **FIG. 3A-3B** are mainly consistent with the example audio queue 303. In some embodiments, the key phrase may consist of a plurality of key words each associated with a first threshold. For each key word, the threshold may set a minimal probability for determining that a candidate word spotted from the audio is the key word. For example, each of "hello," "my," and "device" may require at least 80% probability to determine a match of a candidate word. The determination of the candidate word is described below. Various embodiments below may use "hello my device" as the key phrase, and by the disclosed methods, "a candidate phrase" or "a plurality of candidate words" of "hello my device" may be correspondingly obtained. The "plurality of candidate words" may be comprised in "a sequence of candidate words."

The audio queue 304 is an alternative representation of the audio queue 303, by breaking down the words into language units. There may be many classifications and definitions of language units, such as phonemes, phoneme portions, triphone, word, n-gram, etc. In one example, phonemes are groups of speech sounds that have a unique meaning or function in a language, and can be the smallest meaningful contrastive unit in the phonology of a language. The number of phonemes varies per language, with most languages having 20-40 phonemes. American English may have about 40 phonemes (24 consonants, 16 vowels). In one example, "hello" can be separated into language units/phonemes "hh," "ah," "l," and "ow." Similarly, the audio queue 303 may be represented by the language unit queue 304.

At the step 305, a spectrum may be used to represent an obtained audio (e.g., the audio 202). There may be various different representations of the audio. In this example, the spectrum may show the amplitude of captured sound with respect to time. In various embodiments and implementations, the audio obtained by the processor may correspond to the spectrum or an alternative format and is to be processed as discussed below with respect to steps 306-311. By processing the spectrum with these steps, the corresponding language units in the language unit queue 304 and the corresponding word sequence in the audio queue 303 can be obtained. Vertical dash lines in **FIG. 3A** may mark the same timestamps on various illustrations and indicate the corresponding relationship among them. The steps 306-311 may be also be referred to as an exemplary acoustic model, with modifications and improvements from the traditional method.

At the step 306, a spectrogram may be obtained based at least on the spectrum. The spectrogram may be a frequency versus time representation of a speech signal. In some embodiments, a Fourier transform may be applied to the spectrum from the step 305 to obtain the spectrogram. In the spectrogram, the amplitude information is displayed in a grey scale as dark and bright regions. Bright regions may indicate that no sound was captured (e.g., pause, silence) at the corresponding time at the corresponding frequency, and dark regions may indicate the presence of sound. Based on the variation of the dark and bright patterns in the x-axis direction, boundaries between language units (e.g., words, phones) can be determined. Thus, after determining the key phrase, the starting and end timestamps of the key phrase can be determined accordingly. Further, the pattern of dark regions in the y-axis direction between two dash lines may indicate the various frequencies captured at the corresponding time period and can provide information of the formants (carrying the identity of the sound) and transitions to help determine the corresponding phones.

At the step 307, various feature vectors may be obtained based at least on the spectrogram. In some embodiments, cepstral analysis can be applied to the spectrogram to obtain the feature vectors. For example, a time frame (e.g., a 25 milliseconds time frame) may move along the time axis and sample the spectrogram frame by frame (one frame per 10 milliseconds). A person skilled in the art would appreciate the application of techniques such as Mel frequency cepstral coefficients (MFCCs) (that is, applying the cepstral analysis to a Mel-Spectrum to obtain MFCCs). The speech signals can thus be converted to a series of vectors shown as rectangular blocks at the step 307. Each vector may be a 39D vector, comprising 12 MFCC features, 12 delta MFCC features, 12 delta-delta MFCC features, 1 (log) frame energy, 1 delta (log) frame energy, and 1 delta-delta (log frame energy). These vectors can be given to pattern classifiers to recognize the corresponding language units.

At the step 308, the feature vectors may be mapped to various language units based on various modelling methods, such as pattern classifying based on a codebook, context-dependent triphone modeling, etc. By training the models with sample recordings of speeches, the models can be used to classify an input feature vector as one of the language units. Thus, candidate phones (or other language units) such as "hh" and "ah" shown in small blocks at the step 308 can be obtained accordingly.

Continuing the method 300 on **FIG. 3B,** at the step 309, various methods such as Hidden Markov Model (HMM) may be used to obtain candidate words based at least on the obtained language units. For a limited number of key phrases to be spotted (e.g., "Hello my device," "call the police," "how can I help you"), it is possible to build a HMM for every key word of the key phrase. A lexicon can be used to map each key word to one or more language units. For example, "low" can be mapped to phonemes "l" and "ow," and "hello" can be mapped to phonemes "hh," "ah," "l," and "ow." As shown in the table at the step 309, the x-axis represents a series of language units obtained from the feature vectors in a time sequence corresponding to the audio, and y-axis represents various words (e.g., key words) with corresponding language units. Labels such as "A1" and "B3" indicate a correspondence between a language unit obtained from the feature vector and a language unit of the key word. For each language unit obtained, it may be a part of several different words (e.g., "ow" may be a part of "low" or "hello"). The HMM trained with sample recordings of speeches can model the speeches by assigning probabilities between transitions from one language unit to another. That is, the arrows linking candidate language units may each carry a probability, similar to a decision tree. The arrows may be forward or backward. Here, the probabilities from A4 to A3, from A3 to A2, and from A2 to A1 and the product of these probabilities may be higher than other choices (e.g., links among B4, B3, B2, B1), rendering "hello" as the word of the highest probability corresponding to "hh-ah-l-ow." The probability of other choices may be lower because of uncommon usage, which can be assumed to reflect in the training samples. Thus, at the step 309, a sequence of candidate words corresponding to a sequence of audio portions (each audio portion may correspond to one or more of the language units in the audio) may be obtained (e.g., "hello my device pau order coffee to my car pau sil"), and a first probability score for each corresponding relationship between the obtained candidate word and the audio portion may be obtained. Thus, from the sequence of candidate words, the plurality of candidate words can be obtained corresponding to a plurality of the audio portions, where the sequence of audio portions comprise the plurality of audio portions.

At the step 310, if a plurality of candidate words (the plurality of candidate words constituting a candidate phrase) obtained from the sequence of candidate words match the sequence of key words in a key phrase, first probability scores (confidence level) may be determined to confirm the match. For example, the probabilities of observing the candidate words such as P(hello), P(my), and P(device) may be respectively compared with first thresholds associated with the key words "hello," "my," and "device." The probability of observing the candidate word may be determined in various ways. For example, P(hello) may be determined as a product of P(A4 to A3), P(A3 to A2), and P(A2 to A1) described above at the step 309. If any of the candidate word probability does not exceed the corresponding first threshold, the plurality of candidate words (that is, the candidate phrase) may not be determined as the key phrase. Thus, phrases such as "hello me device" can be properly determined as not matching the key phrase, even if the determination described below with reference to step 311 for "hello me device" is satisfied.

Further, the first probability scores of the candidate words may be gauged sequentially in accordance with their order in the candidate phrase (e.g., in a forward or backward order). For example, in a forward order, P(device) may not be compared with its threshold until P(my) is determined to exceed its threshold. In another example, the Nth candidate word in the candidate phrase is only compared with the threshold of Nth key word in the key phrase. Thus, phrases such as "hello device my" can be properly determined as not matching the key phrase, even if the determination described below with reference to step 311 for "hello device my" is satisfied. Here, the candidate phrase may not necessarily be a phrase that people commonly use. It may comprise a preset made-up phrase or a common phrase.

At the step 311, the overall probability for the candidate phrase may be compared with a second threshold associated with the key phrase. For example, the square root of P(hello)P(my)P(device) may be compared with a second threshold of 0.5. If the second threshold is exceeded, the candidate phrase may be determined as the key phrase. This step may be necessary even with the step 310 performed to ensure the overall match of the phrase, especially when the first thresholds in the step 310 are relatively low. If the second threshold is not exceeded, the candidate phrase may not be determined as the key phrase.

As described above, an exemplary method for key phrase spotting may comprise: obtaining an audio (e.g., the audio 202 described above) comprising a sequence of audio portions (e.g., the step 305 described above, the portion may be any part of the audio such as a length corresponding to a word); obtaining a plurality of candidate words corresponding to a plurality of the audio portions and obtaining a first probability score for each corresponding relationship between the obtained candidate word and the audio portion (e.g., the steps 306-309 described above, where a sequence of candidate words are obtained from a sequence of audio portions, the sequence of candidate words comprising the plurality of candidate words and the sequence of audio portions comprising the plurality of audio portions); determining if the plurality of candidate words respectively match a plurality of key words of a key phrase and if the first probability score of each of the plurality of candidate words exceeds a corresponding first threshold (e.g., the step 310 described above), the plurality of candidate words constituting a candidate phrase (e.g., "hello my device" described above); in response to determining the plurality of candidate words matching the plurality of key words and the each first probability score exceeding the corresponding threshold, obtaining a second probability score representing a matching relationship between the candidate phrase and the key phrase based on the first probability score of each of the plurality of candidate words; and in response to determining the second probability score exceeding a second threshold, determining the candidate phrase as the key phrase (e.g., the step 311 described above). The method may further comprise, in response to determining the first probability score of any of the plurality of candidate words not exceeding the corresponding threshold, not determining the candidate phrase as the key phrase.

In some embodiments, the method may be implementable by a mobile device comprising a microphone, a processor, and a non-transitory computer-readable storage medium storing instructions. For example, the microphone may be configured to receive the audio, and the instructions, when executed by the processor, may cause the processor to perform the method. The obtained audio may comprise a speech recorded by the microphone. The speech may be captured from one or more occupants (e.g., driver, passenger) in a vehicle. The mobile device may comprise a mobile phone.

In some embodiments, the sequence of audio portions may include a time sequence. Obtaining the plurality of candidate words corresponding to a plurality of the audio portions and obtaining a first probability score for each corresponding relationship between the obtained candidate word and the audio portion may comprise: obtaining a spectrogram corresponding to the audio (e.g., the step 306 described above), obtaining a feature vector for each time frame along the spectrogram to obtain a plurality of feature vectors corresponding to the spectrogram (e.g., the step 307 described above), obtaining a plurality of language units corresponding to the plurality of feature vectors (e.g., the step 308 described above), obtaining a sequence of candidate words corresponding to the audio based at least on a lexicon mapping language units to words, and for the each candidate word, obtaining the first probability score based at least on a model trained with sample sequences of language units (e.g., the step 309 described above); and obtaining the plurality of candidate words from the sequence of candidate words (e.g., at the step 309 described above, the candidate phrase comprising the plurality of candidate words can be obtained as a portion of the sequence of candidate words).

In some embodiments, the method may further comprise determining a starting time and an end time of the key phrase in the obtained audio based at least on the time frame. For example, the pattern boundary described above in the step 306 can be used to determine the starting and end time for various language units. For another example with references to the steps 306 to 308 described above, at each time frame, a probability score of the match between the obtained feature vector and the language unit can be determined based on methods such as applying a model trained with sample speeches. A higher score can indicate a starting or end of a language unit, which can be linked to the obtained candidate word to help determine a starting and end time for the candidate phrase in the audio.

In some embodiments, the plurality of candidate words may be in chronological order (that is, consecutive words obtained from the sequence of candidate words and in the same word sequence), and the respective match between the plurality of candidate words and the plurality of key words may comprise a match between a candidate word in a sequential order in the candidate phrase and a key word in the same sequential order in the key phrase. For example, the obtained audio is "what a nice day today, hello my device, order coffee to my car..." of which the key phrase is "hello my device." From the obtained audio, one or more candidate words such as "what a nice day today, hello my device, order coffee to my car..." may be obtained and from which, a candidate phrase "hello my device" may be obtained at the step 309. To ensure the matches between the candidate words and the key words (of the same number of words) are accurate, sequentially, the candidate words in the candidate phrase and the key words in the key phrase may be compared. That's is, the first word in the candidate phrase may be compared with the first word in the key phrase, the second word in the candidate phrase may be compared with the second word in the key phrase, and so forth until all words are compared. If it is confirmed that the candidate phrase and the key phrase comprises the same words in the same sequence, the first and second probability score can be evaluated to further determine the match.

In some embodiments, determining if the plurality of candidate words respectively match the plurality of key words of the key phrase and if the first probability score of each of the plurality of candidate words exceeds the corresponding first threshold may comprise determining, in a forward or backward sequential order (shown as forward and backward arrows at the step 310 described above), the respective match between the plurality of candidate words and the plurality of key words.

In some embodiments, the method may not be implemented based on or partially based on a language model, and the method may not be implemented by or partially by a voice decoder. As discussed above, since a fixed number of key phrases need to be spotted, these key phrases can be individually modeled and determined based on acoustics, obviating the language model and voice decoder. Without the significant computing power requirement, the disclosed methods and systems can be implemented on mobile devices such as mobile phones. The mobile devices can spot the key phrases without drawing computation power from other devices such as servers. In some embodiments, the method may be implementable to spot a plurality of key phrases from the audio, and the plurality of key phrases may comprise at least one of a phrase for awakening an application, a phrase of a standardized language, or an emergency triggering phrase.

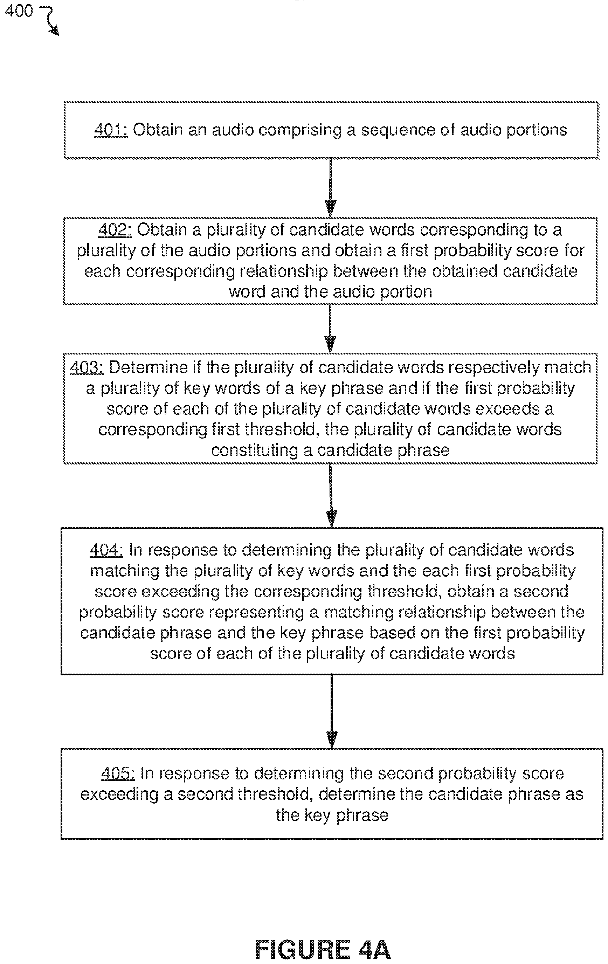

FIG. 4A illustrates a flowchart of an example method 400 for key phrase spotting, according to various embodiments of the present disclosure. The method 400 may be implemented in various environments including, for example, the environment 100 of FIG. 1. The example method 400 may be implemented by one or more components of the system 102 (e.g., the processor 104, the memory 106). The operations of the method 400 presented below are intended to be illustrative. Depending on the implementation, the example method 400 may include additional, fewer, or alternative steps performed in various orders or in parallel. The method 400 may comprise the following steps (the steps are illustrated as blocks).

At block 401, an audio comprising a sequence of audio portions may be obtained. At block 402, a plurality of candidate words may be obtained corresponding to a plurality of the audio portions , and a first probability score for each corresponding relationship between the obtained candidate word and the audio portion may be obtained. At block 403, it may be determined if the plurality of candidate words respectively match a plurality of key words of a key phrase and if the first probability score of each of the plurality of candidate words exceeds a corresponding first threshold, the plurality of candidate words constituting a candidate phrase. At block 404, in response to determining the plurality of candidate words matching the plurality of key words and the each first probability score exceeding the corresponding threshold, a second probability score representing a matching relationship between the candidate phrase and the key phrase may be obtained based on the first probability score of each of the plurality of candidate words. At block 405, in response to determining the second probability score exceeding a second threshold, the candidate phrase may be determined as the key phrase.

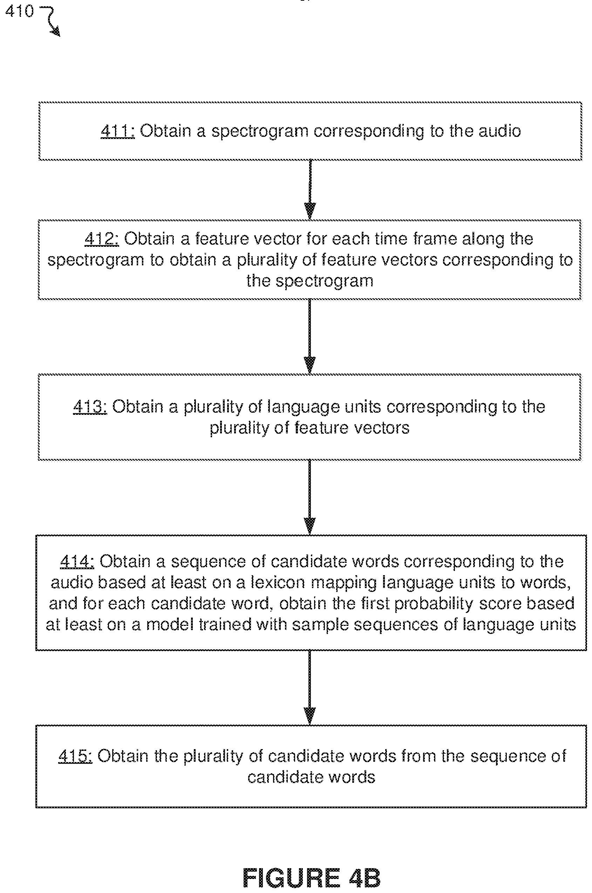

**FIG. 4B** illustrates a flowchart of an example method 410 for key phrase spotting, according to various embodiments of the present disclosure. The method 410 may be implemented in various environments including, for example, the environment 100 of **FIG. 1.** The example method 410 may be implemented by one or more components of the system 102 (e.g., the processor 104, the memory 106). The operations of the method 410 presented below are intended to be illustrative. Depending on the implementation, the example method 410 may include additional, fewer, or alternative steps performed in various orders or in parallel. The block 402 described above may comprise the method 410. The method 410 may comprise the following steps.

At block 411, a spectrogram corresponding to the audio (described in the block 401 above) may be obtained. At block 412, a feature vector may be obtained for each time frame along the spectrogram to obtain a plurality of feature vectors corresponding to the spectrogram. At block 413, a plurality of language units corresponding to the plurality of feature vectors may be obtained. At block 414, a sequence of candidate words corresponding to the audio may be obtained based at least on a lexicon mapping language units to words, and for the each candidate word, the first probability score may be obtained based at least on a model trained with sample sequences of language units. At block 415, the plurality of candidate words may be obtained from the sequence of candidate words.

The techniques described herein are implemented by one or more special-purpose computing devices. The special-purpose computing devices may include one or more hardware processors programmed to perform the techniques pursuant to program instructions in firmware, memory, other storage, or a combination. The special-purpose computing devices may be desktop computer systems, server computer systems, portable computer systems, handheld devices, networking devices or any other device or combination of devices that incorporate hard-wired and/or program logic to implement the techniques. Computing device(s) are generally controlled and coordinated by operating system software. Conventional operating systems control and schedule computer processes for execution, perform memory management, provide file system, networking, I/O services, and provide a user interface functionality, such as a graphical user interface ("GUI"), among other things.

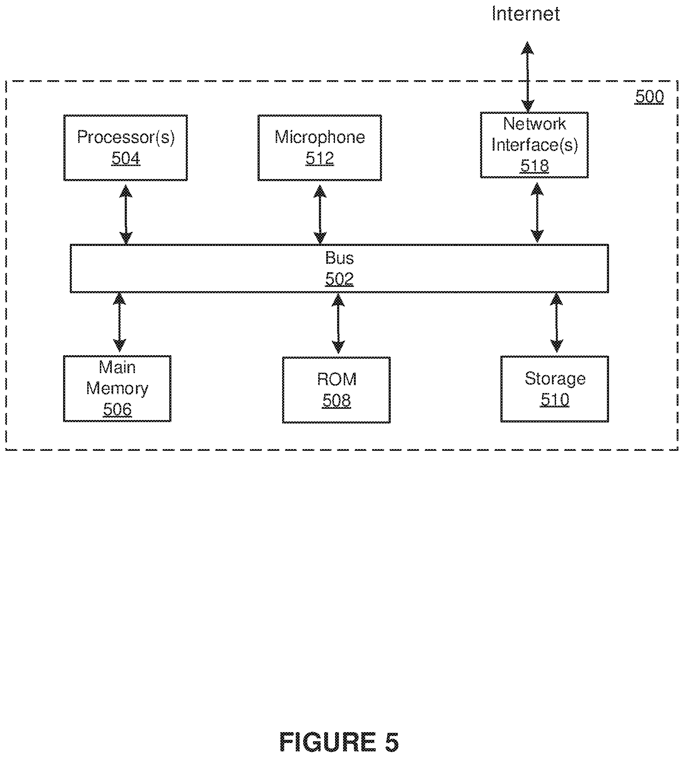

**FIG. 5** is a block diagram that illustrates a computer system 500 upon which any of the embodiments described herein may be implemented. The system 500 may correspond to the system 102 described above. The computer system 500 includes a bus 502 or other communication mechanism for communicating information, one or more hardware processors 504 coupled with bus 502 for processing information. Hardware processor(s) 504 may be, for example, one or more general purpose microprocessors. The processor(s) 504 may correspond to the processor 104 described above.

The computer system 500 also includes a main memory 506, such as a random access memory (RAM), cache and/or other dynamic storage devices, coupled to bus 502 for storing information and instructions to be executed by processor 504. Main memory 506 also may be used for storing temporary variables or other intermediate information during execution of instructions to be executed by processor 504. Such instructions, when stored in storage media accessible to processor 504, render computer system 500 into a special-purpose machine that is customized to perform the operations specified in the instructions. The computer system 500 further includes a read only memory (ROM) 508 or other static storage device coupled to bus 502 for storing static information and instructions for processor 504. A storage device 510, such as a magnetic disk, optical disk, or USB thumb drive (Flash drive), etc., is provided and coupled to bus 502 for storing information and instructions. The main memory 506, the ROM 508, and/or the storage 510 may correspond to the memory 106 described above.

The computer system 500 may implement the techniques described herein using customized hard-wired logic, one or more ASICs or FPGAs, firmware and/or program logic which in combination with the computer system causes or programs computer system 500 to be a special-purpose machine. According to one embodiment, the techniques herein are performed by computer system 500 in response to processor(s) 504 executing one or more sequences of one or more instructions contained in main memory 506. Such instructions may be read into main memory 506 from another storage medium, such as storage device 510. Execution of the sequences of instructions contained in main memory 506 causes processor(s) 504 to perform the process steps described herein. In alternative embodiments, hard-wired circuitry may be used in place of or in combination with software instructions.

The main memory 506, the ROM 508, and/or the storage 510 may include non-transitory storage media. The term "non-transitory media," and similar terms, as used herein refers to any media that store data and/or instructions that cause a machine to operate in a specific fashion. Such non-transitory media may comprise non-volatile media and/or volatile media. Non-volatile media includes, for example, optical or magnetic disks, such as storage device 510. Volatile media includes dynamic memory, such as main memory 506. Common forms of non-transitory media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge, and networked versions of the same.

The computer system 500 also includes a microphone 512 or an alternative audio capturing device. The microphone 512 may correspond to the microphone 103 described above.

The computer system 500 also includes a communication interface 518 coupled to bus 502. Communication interface 518 provides a two-way data communication coupling to one or more network links that are connected to one or more local networks. For example, communication interface 518 may be an integrated services digital network (ISDN) card, cable modem, satellite modem, or a modem to provide a data communication connection to a corresponding type of telephone line. As another example, communication interface 518 may be a local area network (LAN) card to provide a data communication connection to a compatible LAN (or WAN component to communicated with a WAN). Wireless links may also be implemented. In any such implementation, communication interface 518 sends and receives electrical, electromagnetic or optical signals that carry digital data streams representing various types of information.

The computer system 500 can send messages and receive data, including program code, through the network(s), network link and communication interface 518. In the Internet example, a server might transmit a requested code for an application program through the Internet, the ISP, the local network and the communication interface 518.

The received code may be executed by processor 504 as it is received, and/or stored in storage device 510, or other non-volatile storage for later execution.

Each of the processes, methods, and algorithms described in the preceding sections may be embodied in, and fully or partially automated by, code modules executed by one or more computer systems or computer processors comprising computer hardware. The processes and algorithms may be implemented partially or wholly in application-specific circuitry.

The various features and processes described above may be used independently of one another, or may be combined in various ways. All possible combinations and sub-combinations are intended to fall within the scope of this disclosure. In addition, certain method or process blocks may be omitted in some implementations. The methods and processes described herein are also not limited to any particular sequence, and the blocks or states relating thereto can be performed in other sequences that are appropriate. For example, described blocks or states may be performed in an order other than that specifically disclosed, or multiple blocks or states may be combined in a single block or state. The example blocks or states may be performed in serial, in parallel, or in some other manner. Blocks or states may be added to or removed from the disclosed example embodiments. The example systems and components described herein may be configured differently than described. For example, elements may be added to, removed from, or rearranged compared to the disclosed example embodiments.

The various operations of example methods described herein may be performed, at least partially, by one or more processors that are temporarily configured (e.g., by software) or permanently configured to perform the relevant operations. Whether temporarily or permanently configured, such processors may constitute processor-implemented engines that operate to perform one or more operations or functions described herein.

Similarly, the methods described herein may be at least partially processor-implemented, with a particular processor or processors being an example of hardware. For example, at least some of the operations of a method may be performed by one or more processors or processor-implemented engines. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an Application Program Interface (API)).

The performance of certain of the operations may be distributed among the processors, not only residing within a single machine, but deployed across a number of machines. In some example embodiments, the processors or processor-implemented engines may be located in a single geographic location (e.g., within a home environment, an office environment, or a server farm). In other example embodiments, the processors or processor-implemented engines may be distributed across a number of geographic locations.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Although an overview of the subject matter has been described with reference to specific example embodiments, various modifications and changes may be made to these embodiments without departing from the broader scope of embodiments of the present disclosure. Such embodiments of the subject matter may be referred to herein, individually or collectively, by the term "invention" merely for convenience and without intending to voluntarily limit the scope of this application to any single disclosure or concept if more than one is, in fact, disclosed.

The embodiments illustrated herein are described in sufficient detail to enable those skilled in the art to practice the teachings disclosed. Other embodiments may be used and derived therefrom, such that structural and logical substitutions and changes may be made without departing from the scope of this disclosure. The Detailed Description, therefore, is not to be taken in a limiting sense, and the scope of various embodiments is defined only by the appended claims.

Any process descriptions, elements, or blocks in the flow diagrams described herein and/or depicted in the attached figures should be understood as potentially representing modules, segments, or portions of code which include one or more executable instructions for implementing specific logical functions or steps in the process. Alternate implementations may be included within the scope of the embodiments described herein in which elements or functions may be deleted, executed out of order from that shown or discussed, including substantially concurrently or in reverse order, depending on the functionality involved, as would be understood by those skilled in the art.

As used herein, the term "or" may be construed in either an inclusive or exclusive sense. Moreover, plural instances may be provided for resources, operations, or structures described herein as a single instance. Additionally, boundaries between various resources, operations, engines, and data stores are somewhat arbitrary, and particular operations are illustrated in a context of specific illustrative configurations. Other allocations of functionality are envisioned and may fall within a scope of various embodiments of the present disclosure. In general, structures and functionality presented as separate resources in the example configurations may be implemented as a combined structure or resource. Similarly, structures and functionality presented as a single resource may be implemented as separate resources. These and other variations, modifications, additions, and improvements may fall within a scope of embodiments of the present disclosure as represented by the appended claims. The specification and drawings are, accordingly, to be regarded in an illustrative rather than a restrictive sense.

Conditional language, such as, among others, "can," "could," "might," or "may," unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment, as long as the resulting embodiments are still comprised within the scope defined by the appended claims.

**Claims**

1. A method, implemented on a computing device having at least one processor and at least one computer-readable storage medium, for key phrase spotting, the method comprising:

   obtaining an audio comprising a sequence of audio portions;
   obtaining a plurality of candidate words corresponding to a plurality of the audio portions and obtaining a first probability score for each corresponding relationship between the obtained candidate word and the audio portion;
   determining if the plurality of candidate words respectively match a plurality of key words of a key phrase and if the first probability score of each of the plurality of candidate words exceeds a corresponding first threshold, the plurality of candidate words constituting a candidate phrase;
   in response to determining the plurality of candidate words matching the plurality of key words and the first probability score of each of the plurality of candidate words exceeding the corresponding threshold, obtaining a second probability score representing a matching relationship between the candidate phrase and the key phrase based on the first probability score of each of the plurality of candidate words; and
   in response to determining the second probability score exceeding a second threshold, determining the candidate phrase as the key phrase.

2. The method of claim 1, wherein:
   obtaining the plurality of candidate words corresponding to the plurality of the audio portions and obtaining the first probability score for each corresponding relationship between the obtained candidate word and the audio portion comprises:

   obtaining a spectrogram corresponding to the audio;
   obtaining a feature vector for each time frame along the spectrogram to obtain a plurality of the feature vectors corresponding to the spectrogram;
   obtaining a plurality of language units corresponding to the plurality of the feature vectors;
   obtaining a sequence of candidate words corresponding to the audio based at least on a lexicon mapping language units to words, and for the each candidate word, obtaining the first probability score based at least on a model trained with sample sequences of language units; and obtaining the plurality of candidate words from the sequence of candidate words.

3. The method of claim 2, further comprising:
determining a starting time and an end time of the key phrase in the obtained audio based at least on the time frame.

4. The method of claim 1, wherein:

the plurality of candidate words are in chronological order; and
the respective match between the plurality of candidate words and the plurality of key words comprises a match between a candidate word in a sequential order in the candidate phrase and a key word in the same sequential order in the key phrase.

5. The method of claim 4, wherein:

determining if the plurality of candidate words respectively match the plurality of key words of the key phrase and if the first probability score of each of the plurality of candidate words exceeds the corresponding first threshold comprises:
determining, in a forward or backward sequential order, the respective match between the plurality of candidate words and the plurality of key words.

6. The method of claim 1, further comprising:
in response to determining the first probability score of any of the plurality of candidate words not exceeding the corresponding threshold, not determining the candidate phrase as the key phrase.

7. The method of claim 1, wherein:

the method is not implemented based on or partially based on a language model; and
the method is not implemented by or partially by a voice decoder.

8. The method of claim 1, wherein:
the key phrase comprises at least one of a phrase for awakening an application, a phrase of a standardized language, or an emergency triggering phrase.

9. The method of claim 1, wherein:

the method is implementable by a mobile device comprising a microphone; and
the obtained audio comprises a speech recorded by the microphone of one or more occupants in a vehicle.

10. A system for key phrase spotting, comprising:

a processor; and
a non-transitory computer-readable storage medium storing instructions that, when executed by the processor, cause the processor to perform a method, the method comprising:

obtaining an audio comprising a sequence of audio portions;
obtaining a plurality of candidate words corresponding to a plurality of the audio portions and obtaining a first probability score for each corresponding relationship between the obtained candidate word and the audio portion;
determining if the plurality of candidate words respectively match a plurality of key words of a key phrase and if the first probability score of each of the plurality of candidate words exceeds a corresponding first threshold, the plurality of candidate words constituting a candidate phrase;
in response to determining the plurality of candidate words matching the plurality of key words and the first probability score of each of the plurality of candidate words exceeding the corresponding threshold, obtaining a second probability score representing a matching relationship between the candidate phrase and the key phrase based on the first probability score of each of the plurality of candidate words; and
in response to determining the second probability score exceeding a second threshold, determining the candidate phrase as the key phrase.

11. The system of claim 10, wherein:
obtaining the plurality of candidate words corresponding to the plurality of the audio portions and obtaining the first probability score for each corresponding relationship between the obtained candidate word and the audio portion comprises:

obtaining a spectrogram corresponding to the audio;
obtaining a feature vector for each time frame along the spectrogram to obtain a plurality of the feature vectors corresponding to the spectrogram;
obtaining a plurality of language units corresponding to the plurality of the feature vectors;

obtaining a sequence of candidate words corresponding to the audio based at least on a lexicon mapping language units to words, and for the each candidate word, obtaining the first probability score based at least on a model trained with sample sequences of language units; and obtaining the plurality of candidate words from the sequence of candidate words.

12. The system of claim 10, wherein:

the plurality of candidate words are in chronological order; and
the respective match between the plurality of candidate words and the plurality of key words comprises a match between a candidate word in a sequential order in the candidate phrase and a key word in the same sequential order in the key phrase.

13. The system of claim 10, wherein:

the processor is not caused to implement a language model; and
the processor is not caused to implement a voice decoder.

14. The system of claim 10, further comprising:
a microphone configured to receive the audio and transmit the recorded audio to the processor, wherein:

the system is implementable on a mobile device, the mobile device comprising a mobile phone; and
the obtained audio comprises a speech of one or more occupants in a vehicle.

15. A non-transitory computer-readable medium for key phrase spotting, comprising instructions stored therein, wherein the instructions, when executed by one or more processors, cause the one or more processors to perform a method comprising:

obtaining an audio comprising a sequence of audio portions;
obtaining a plurality of candidate words corresponding to a plurality of the audio portions and obtaining a first probability score for each corresponding relationship between the obtained candidate word and the audio portion;
determining if the plurality of candidate words respectively match a plurality of key words of a key phrase and if the first probability score of each of the plurality of candidate words exceeds a corresponding first threshold, the plurality of candidate words constituting a candidate phrase;

in response to determining the plurality of candidate words matching the plurality of key words and the first probability score of each of the plurality of candidate words exceeding the corresponding threshold, obtaining a second probability score representing a matching relationship between the candidate phrase and the key phrase based on the first probability score of each of the plurality of candidate words; and
in response to determining the second probability score exceeding a second threshold, determining the candidate phrase as the key phrase.

**Patentansprüche**

1. Verfahren, implementiert auf einer Computervorrichtung mit mindestens einem Prozessor und mindestens einem computerlesbaren Speichermedium, zum Aufspüren von Schlüsselphrasen, wobei das Verfahren umfasst:

Erhalten eines Audios, das eine Sequenz von Audioabschnitten umfasst;
Erhalten einer Vielzahl von Kandidatenwörtern, die einer Vielzahl der Audioabschnitte entsprechen, und Erhalten eines ersten Wahrscheinlichkeitswerts für jede entsprechende Beziehung zwischen dem erhaltenen Kandidatenwort und dem Audioabschnitt;
Bestimmen, ob die Vielzahl von Kandidatenwörtern jeweils mit einer Vielzahl von Schlüsselwörtern einer Schlüsselphrase übereinstimmen und ob der erste Wahrscheinlichkeitswert jedes der Vielzahl von Kandidatenwörtern einen entsprechenden ersten Schwellenwert überschreitet, wobei die Vielzahl von Kandidatenwörtern eine Kandidatenphrase bildet;
als Reaktion auf das Bestimmen, dass die Vielzahl von Kandidatenwörtern mit der Vielzahl von Schlüsselwörtern übereinstimmen und der erste Wahrscheinlichkeitswert jedes der Vielzahl von Kandidatenwörtern den entsprechenden Schwellenwert überschreitet, Erhalten eines zweiten Wahrscheinlichkeitswerts, der eine übereinstimmende Beziehung zwischen der Kandidatenphrase und der Schlüsselphrase darstellt, basierend auf dem ersten Wahrscheinlichkeitswert jedes der Vielzahl von Kandidatenwörtern; und
als Reaktion auf das Bestimmen, dass der zweite Wahrscheinlichkeitswert einen zweiten Schwellenwert überschreitet, Bestimmen der Kandidatenphrase als die Schlüsselphrase.

2. Verfahren nach Anspruch 1, wobei:
Erhalten der Vielzahl von Kandidatenwörtern, die der Vielzahl der Audioabschnitte entsprechen, und Erhalten des ersten Wahrscheinlichkeitswerts für jede entsprechende Beziehung zwischen dem erhaltenen Kandidatenwort und dem Audioabschnitt Folgendes umfasst:

Erhalten eines dem Audio entsprechenden Spektrogramms;

Erhalten eines Merkmalsvektors für jeden Zeitrahmen entlang des Spektrogramms, um eine Vielzahl der Merkmalsvektoren zu erhalten, die dem Spektrogramm entsprechen;

Erhalten einer Vielzahl von Spracheinheiten, die der Vielzahl der Merkmalsvektoren entsprechen;

Erhalten einer Sequenz von Kandidatenwörtern, die dem Audio entsprechen, basierend auf mindestens einem Lexikon, das Spracheinheiten auf Wörter abbildet, und für jedes Kandidatenwort, Erhalten des ersten Wahrscheinlichkeitswerts basierend auf mindestens einem Modell, das mit Beispielsequenzen von Spracheinheiten trainiert wurde; und

Erhalten der Vielzahl von Kandidatenwörtern aus der Sequenz von Kandidatenwörtern.

3. Verfahren nach Anspruch 2, ferner umfassend: Bestimmen einer Startzeit und einer Endzeit der Schlüsselphrase in dem erhaltenen Audio basierend auf mindestens dem Zeitrahmen.

4. Verfahren nach Anspruch 1, wobei:

die Vielzahl der Kandidatenwörter in chronologischer Reihenfolge sind; und

die jeweilige Übereinstimmung zwischen der Vielzahl von Kandidatenwörtern und der Vielzahl von Schlüsselwörtern eine Übereinstimmung zwischen einem Kandidatenwort in einer sequentiellen Reihenfolge in der Kandidatenphrase und einem Schlüsselwort in derselben sequentiellen Reihenfolge in der Schlüsselphrase umfasst.

5. Verfahren nach Anspruch 4, wobei:
Bestimmen, ob die Vielzahl von Kandidatenwörtern jeweils mit einer Vielzahl von Schlüsselwörtern einer Schlüsselphrase übereinstimmen und ob der erste Wahrscheinlichkeitswert jedes der Vielzahl von Kandidatenwörtern einen entsprechenden ersten Schwellenwert überschreitet, Folgendes umfasst:
Bestimmen der jeweiligen Übereinstimmung zwischen der Vielzahl von Kandidatenwörtern und der Vielzahl von Schlüsselwörtern in einer vorwärts oder rückwärts gerichteten Reihenfolge.

6. Verfahren nach Anspruch 1, ferner umfassend:
als Reaktion auf das Bestimmen des ersten Wahrscheinlichkeitswerts, dass ein beliebiges der Vielzahl von Kandidatenwörtern den entsprechenden Schwellenwert nicht überschreitet, nicht Bestimmen der Kandidatenphrase als die Schlüsselphrase.

7. Verfahren nach Anspruch 1, wobei:

das Verfahren nicht basierend auf oder teilweise basierend auf einem Sprachmodell implementiert wird; und

das Verfahren nicht durch oder teilweise durch einen Sprachdecoder implementiert wird.

8. Verfahren nach Anspruch 1, wobei:
die Schlüsselphrase mindestens eine der folgenden Phrasen umfasst: eine Phrase zum Aufwecken einer Anwendung, eine Phrase einer standardisierten Sprache oder eine notfallauslösende Phrase.

9. Verfahren nach Anspruch 1, wobei:

das Verfahren durch ein Mobilgerät implementierbar ist, das ein Mikrofon umfasst; und

das erhaltene Audio eine vom Mikrofon aufgezeichnete Sprache eines oder mehrerer Insassen in einem Fahrzeug umfasst.

10. System zum Aufspüren von Schlüsselphrasen, umfassend:

einen Prozessor; und

ein nicht-transitorisches computerlesbares Medium, auf dem Anweisungen gespeichert sind, die, wenn sie von dem Prozessor ausgeführt werden, den Prozessor veranlassen, ein Verfahren durchzuführen, wobei das Verfahren umfasst:

Erhalten eines Audios, das eine Sequenz von Audioabschnitten umfasst;

Erhalten einer Vielzahl von Kandidatenwörtern, die einer Vielzahl der Audioabschnitte entsprechen, und Erhalten eines ersten Wahrscheinlichkeitswerts für jede entsprechende Beziehung zwischen dem erhaltenen Kandidatenwort und dem Audioabschnitt;

Bestimmen, ob die Vielzahl von Kandidatenwörtern jeweils mit einer Vielzahl von Schlüsselwörtern einer Schlüsselphrase übereinstimmen und ob der erste Wahrscheinlichkeitswert jedes der Vielzahl von Kandidatenwörtern einen entsprechenden ersten Schwellenwert überschreitet, wobei die Vielzahl von Kandidatenwörtern eine Kandidatenphrase bildet;

als Reaktion auf das Bestimmen, dass die Vielzahl von Kandidatenwörtern mit der Vielzahl von Schlüsselwörtern übereinstimmen und der erste Wahrscheinlichkeitswert jedes der Vielzahl von Kandidatenwörtern den entsprechenden Schwellenwert überschreitet, Erhalten eines zweiten Wahrscheinlichkeitswerts, der eine übereinstimmende Beziehung zwischen der Kandidatenphrase und der Schlüsselphrase darstellt, basierend auf dem ersten Wahrscheinlichkeitswert jedes der Vielzahl von Kandidatenwörtern; und

als Reaktion auf das Bestimmen, dass der zweite Wahrscheinlichkeitswert einen zweiten Schwellenwert überschreitet, Bestimmen der Kandidatenphrase als die Schlüsselphrase.

11. System nach Anspruch 10, wobei:
Erhalten der Vielzahl von Kandidatenwörtern, die der Vielzahl der Audioabschnitte entsprechen, und Erhalten des ersten Wahrscheinlichkeitswerts für jede entsprechende Beziehung zwischen dem erhaltenen Kandidatenwort und dem Audioabschnitt Folgendes umfasst:

Erhalten eines dem Audio entsprechenden Spektrogramms;
Erhalten eines Merkmalsvektors für jeden Zeitrahmen entlang des Spektrogramms, um eine Vielzahl der Merkmalsvektoren zu erhalten, die dem Spektrogramm entsprechen;
Erhalten einer Vielzahl von Spracheinheiten, die der Vielzahl der Merkmalsvektoren entsprechen;
Erhalten einer Sequenz von Kandidatenwörtern, die dem Audio entsprechen, basierend auf mindestens einem Lexikon, das Spracheinheiten auf Wörter abbildet, und für jedes Kandidatenwort, Erhalten des ersten Wahrscheinlichkeitswerts basierend auf mindestens einem Modell, das mit Beispielsequenzen von Spracheinheiten trainiert wurde; und
Erhalten der Vielzahl von Kandidatenwörtern aus der Sequenz von Kandidatenwörtern.

12. System nach Anspruch 10, wobei:

die Vielzahl der Kandidatenwörter in chronologischer Reihenfolge sind; und
die jeweilige Übereinstimmung zwischen der Vielzahl von Kandidatenwörtern und der Vielzahl von Schlüsselwörtern eine Übereinstimmung zwischen einem Kandidatenwort in einer sequentiellen Reihenfolge in der Kandidatenphrase und einem Schlüsselwort in derselben sequentiellen Reihenfolge in der Schlüsselphrase umfasst.

13. System nach Anspruch 10, wobei:

der Prozessor nicht dazu veranlasst wird, ein Sprachmodell zu implementieren; und
der Prozessor nicht dazu veranlasst wird, einen Sprachdecoder zu implementieren.

14. System nach Anspruch 10, ferner umfassend:
ein Mikrofon, das konfiguriert ist, um das Audio zu empfangen und das aufgezeichnete Audio an den Prozessor zu übertragen, wobei:

das System auf einem Mobilgerät implementierbar ist, wobei das Mobilgerät ein Mobiltelefon umfasst; und
das erhaltene Audio eine Sprache eines oder mehrerer Insassen in einem Fahrzeug umfasst.

15. Nicht-transitorisches computerlesbares Medium zum Aufspüren von Schlüsselphrasen, das darin gespeicherte Anweisungen umfasst, wobei die Anweisungen, wenn sie von einem oder mehreren Prozessoren ausgeführt werden, den einen oder die mehreren Prozessoren veranlassen, ein Verfahren durchzuführen, das Folgendes umfasst:

Erhalten eines Audios, das eine Sequenz von Audioabschnitten umfasst;
Erhalten einer Vielzahl von Kandidatenwörtern, die einer Vielzahl der Audioabschnitte entsprechen, und Erhalten eines ersten Wahrscheinlichkeitswerts für jede entsprechende Beziehung zwischen dem erhaltenen Kandidatenwort und dem Audioabschnitt;
Bestimmen, ob die Vielzahl von Kandidatenwörtern jeweils mit einer Vielzahl von Schlüsselwörtern einer Schlüsselphrase übereinstimmen und ob der erste Wahrscheinlichkeitswert jedes der Vielzahl von Kandidatenwörtern einen entsprechenden ersten Schwellenwert überschreitet, wobei die Vielzahl von Kandidatenwörtern eine Kandidatenphrase bildet;
als Reaktion auf das Bestimmen, dass die Vielzahl von Kandidatenwörtern mit der Vielzahl von Schlüsselwörtern übereinstimmen und der erste Wahrscheinlichkeitswert jedes der Vielzahl von Kandidatenwörtern den entsprechenden Schwellenwert überschreitet, Erhalten eines zweiten Wahrscheinlichkeitswerts, der eine übereinstimmende Beziehung zwischen der Kandidatenphrase und der Schlüsselphrase darstellt, basierend auf dem ersten Wahrscheinlichkeitswert jedes der Vielzahl von Kandidatenwörtern; und
als Reaktion auf das Bestimmen, dass der zweite Wahrscheinlichkeitswert einen zweiten Schwellenwert überschreitet, Bestimmen der Kandidatenphrase als die Schlüsselphrase.

**Revendications**

1. Procédé, mis en œuvre sur un dispositif informatique ayant au moins un processeur et au moins un support de stockage lisible par ordinateur, de repérage d'expressions clés, le procédé comprenant :

   l'obtention d'un audio comprenant une séquence de parties audio ;
   l'obtention d'une pluralité de mots candidats correspondant à une pluralité des parties audio et l'obtention d'un premier score de probabilité pour chaque relation correspondante entre le mot candidat obtenu et la partie audio ;
   la détermination si la pluralité de mots candidats correspondent respectivement à une pluralité de mots clés d'une expression clé et si le premier score de probabilité de chacun de la pluralité de mots candidats dépasse un premier seuil correspondant, la pluralité de mots candidats constituant une expression candidate ;
   en réponse à la détermination que la pluralité de mots candidats correspondent à la pluralité de mots clés et que le premier score de probabilité de chacun de la pluralité de mots candidats dépasse le seuil correspondant, l'obtention d'un second score de probabilité représentant une relation de correspondance entre l'expression candidate et l'expression clé sur la base du premier score de probabilité de chacun de la pluralité de mots candidats ; et
   en réponse à la détermination que le second score de probabilité dépasse un second seuil, la détermination de l'expression candidate comme l'expression clé.

2. Procédé selon la revendication 1, dans lequel :
   l'obtention de la pluralité de mots candidats correspondant à la pluralité des parties audio et l'obtention du premier score de probabilité pour chaque relation correspondante entre le mot candidat obtenu et la partie audio comprennent :

   l'obtention d'un spectrogramme correspondant à l'audio ;
   l'obtention d'un vecteur de caractéristique pour chaque trame temporelle le long du spectrogramme pour obtenir une pluralité des vecteurs de caractéristique correspondant au spectrogramme ;
   l'obtention d'une pluralité d'unités de langage correspondant à la pluralité des vecteurs de caractéristique ;
   l'obtention d'une séquence de mots candidats correspondant à l'audio sur la base au moins d'un lexique mettant en correspondance des unités de langage et des mots, et pour le chaque mot candidat, l'obtention du premier score de probabilité sur la base au moins d'un modèle formé avec des séquences échantillons d'unités de langage ; et
   l'obtention de la pluralité de mots candidats à partir de la séquence de mots candidats.

3. Procédé selon la revendication 2, comprenant en outre ;
   la détermination d'un temps de début et d'un temps de fin de l'expression clé dans l'audio obtenu sur la base au moins de la trame temporelle.

4. Procédé selon la revendication 1, dans lequel :

   la pluralité de mots candidats sont dans un ordre chronologique ; et
   la correspondance respective entre la pluralité de mots candidats et la pluralité de mots clés comprend une correspondance entre un mot candidat dans un ordre séquentiel dans l'expression candidate et un mot clé dans le même ordre séquentiel dans l'expression clé.

5. Procédé selon la revendication 4, dans lequel :
   la détermination si la pluralité de mots candidats correspondent respectivement à la pluralité de mots clés de l'expression clé et si le premier score de probabilité de chacun de la pluralité de mots candidats dépasse le premier seuil correspondant comprend :
   la détermination, dans un ordre séquentiel en avant ou en arrière, de la correspondance respective entre la pluralité de mots candidats et la pluralité de mots clés.

6. Procédé selon la revendication 1, comprenant en outre :
   en réponse à la détermination que le premier score de probabilité de n'importe lequel de la pluralité de mots candidats ne dépasse pas le seuil correspondant, la non détermination de l'expression candidate comme l'expression clé.

7. Procédé selon la revendication 1, dans lequel :

   le procédé n'est pas mis en œuvre sur la base ou en partie sur la base d'un modèle linguistique ; et
   le procédé n'est pas mis en œuvre par ou en partie par un décodeur de parole.

8. Procédé selon la revendication 1, dans lequel :
   l'expression clé comprend au moins une parmi une expression pour réveiller une application, une expression d'un langage normalisé ou une expression de déclenchement d'urgence.

9. Procédé selon la revendication 1, dans lequel :

le procédé peut être mis en œuvre par un dispositif mobile comprenant un microphone ; et l'audio obtenu comprend une élocution enregistrée par le microphone d'un ou plusieurs occupants dans un véhicule.

10. Système pour le repérage d'expressions clés, comprenant :

un processeur ; et
un support de stockage lisible par ordinateur non transitoire stockant des instructions qui, quand elles sont exécutées par le processeur, amènent le processeur à effectuer un procédé, le procédé comprenant :

l'obtention d'un audio comprenant une séquence de parties audio ;
l'obtention d'une pluralité de mots candidats correspondant à une pluralité des parties audio et l'obtention d'un premier score de probabilité pour chaque relation correspondante entre le mot candidat obtenu et la partie audio ;
la détermination si la pluralité de mots candidats correspondent respectivement à une pluralité de mots clés d'une expression clé et si le premier score de probabilité de chacun de la pluralité de mots candidats dépasse un premier seuil correspondant, la pluralité de mots candidats constituant une expression candidate ;
en réponse à la détermination que la pluralité de mots candidats correspondent à la pluralité de mots clés et que le premier score de probabilité de chacun de la pluralité de mots candidats dépasse le seuil correspondant, l'obtention d'un second score de probabilité représentant une relation de correspondance entre l'expression candidate et l'expression clé sur la base du premier score de probabilité de chacun de la pluralité de mots candidats ; et
en réponse à la détermination que le second score de probabilité dépasse un second seuil, la détermination de l'expression candidate comme l'expression clé.

11. Système selon la revendication 10, dans lequel :
l'obtention de la pluralité de mots candidats correspondant à la pluralité des parties audio et l'obtention du premier score de probabilité pour chaque relation correspondante entre le mot candidat obtenu et la partie audio comprennent :

l'obtention d'un spectrogramme correspondant à l'audio ;
l'obtention d'un vecteur de caractéristique pour chaque trame temporelle le long du spectrogramme pour obtenir une pluralité des vecteurs de caractéristique correspondant au spectrogramme ;
l'obtention d'une pluralité d'unités de langage correspondant à la pluralité des vecteurs de caractéristique ;
l'obtention d'une séquence de mots candidats correspondant à l'audio sur la base au moins d'un lexique mettant en correspondance des unités de langage et des mots, et pour le chaque mot candidat, l'obtention du premier score de probabilité sur la base au moins d'un modèle formé avec des séquences échantillons d'unités de langage ; et
l'obtention de la pluralité de mots candidats à partir de la séquence de mots candidats.

12. Système selon la revendication 10, dans lequel :

la pluralité de mots candidats sont dans un ordre chronologique ; et
la correspondance respective entre la pluralité de mots candidats et la pluralité de mots clés comprend une correspondance entre un mot candidat dans un ordre séquentiel dans l'expression candidate et un mot clé dans le même ordre séquentiel dans l'expression clé.

13. Système selon la revendication 10, dans lequel :

le processeur n'est pas amené à mettre en œuvre un modèle linguistique ; et
le processeur n'est pas amené à mettre en œuvre un décodeur de parole.

14. Système selon la revendication 10, comprenant en outre :
un microphone configuré pour recevoir l'audio et transmettre l'audio enregistré au processeur, dans lequel :

le système peut être mis en œuvre sur un dispositif mobile, le dispositif mobile comprenant un téléphone mobile ; et
l'audio obtenu comprend une élocution d'un ou plusieurs occupants dans un véhicule.

15. Support lisible par ordinateur non transitoire pour le repérage d'expressions clés, comprenant des instructions stockées dessus, dans lequel les instructions, quand elles sont exécutées par un ou plusieurs processeurs, amènent les un ou plusieurs processeurs à effectuer un procédé comprenant :

l'obtention d'un audio comprenant une séquence de parties audio ;
l'obtention d'une pluralité de mots candidats cor-

**EP 3 628 098 B1**

respondant à une pluralité des parties audio et l'obtention d'un premier score de probabilité pour chaque relation correspondante entre le mot candidat obtenu et la partie audio ;

la détermination si la pluralité de mots candidats correspondent respectivement à une pluralité de mots clés d'une expression clé et si le premier score de probabilité de chacun de la pluralité de mots candidats dépasse un premier seuil correspondant, la pluralité de mots candidats constituant une expression candidate ;

en réponse à la détermination que la pluralité de mots candidats correspondent à la pluralité de mots clés et que le premier score de probabilité de chacun de la pluralité de mots candidats dépasse le seuil correspondant, l'obtention d'un second score de probabilité représentant une relation de correspondance entre l'expression candidate et l'expression clé sur la base du premier score de probabilité de chacun de la pluralité de mots candidats ; et

en réponse à la détermination que le second score de probabilité dépasse un second seuil, la détermination de l'expression candidate comme l'expression clé.

100

Data Store
108

. . .

Computing Device
(e.g., server)
109

System 102

Processor
104

Memory
106

Microphone
103

Display
105

Computing Device
107

101

# FIGURE 1

200

Computing Device 109
(e.g., server)

Information 204    Return information 206

System 102 (e.g., mobile phone)

Processor
104

Memory
106

Microphone
103

Display
105

Audio (voice,
speech, etc.)
202

**FIGURE 2**

300

time

Emergency triggering phrase

301

| What | is | going | on | pau | sil | Call | the | police | pau | sil |

Standardized language

302

| What | a | nice | day | pau | sil | How | can | I | help | you | pau | sil |

Awakening phrase

303

| Hello | my | device | pau | Order | coffee | to | my | car | pau | sil |

304

| HH | AH | L | OW | M | AY | D | IH | V | AY | S | pau | AO | R | D | ER | K | AA | F | IY | T | UW | M | AY | K | AA | R | pau | sil |

305

Amplitude v. time

306

Spectrogram

Frequency v. time

307

Time frame (e.g., a 25 ms frame computed for every 10 ms)

· · · · · ·

Feature vectors

308

| HH | AH | L | OW | M | AY |

Mapping feature vectors to phones

time

# FIGURE 3A

## Continuing from FIG. 3A

309

| ... | .. | | | | | | | | ... |
|---|---|---|---|---|---|---|---|---|---|
| low | L | | | B3 | | | | | ... |
| | OW | | | | B4 | | | | ... |
| hello | HH | A1 | | | | | | | ... |
| | AH | | A2 | | | | | | ... |
| | L | | | A3 | | | | | ... |
| | OW | | | | A4 | | | | ... |
| my | M | | | | | A5 | | | ... |
| | AY | | | | | | A6 | | ... |
| ha | AH | | B2 | | | | | | ... |
| | HH | B1 | | | | | | | ... |
| | | HH | AH | L | OW | M | AY | ... | |

time

Highest P
words

310

| Hello | | my | | device |
|---|---|---|---|---|

Compare P(hello)    ←    Compare P(my) with    ←    Compare P(device) with
with Threshold (hello)    Threshold (my)    Threshold (device)

time

311

Compare P(hello my device) with
Threshold (hello my device)

# FIGURE 3B

400

**401:** Obtain an audio comprising a sequence of audio portions

**402:** Obtain a plurality of candidate words corresponding to a plurality of the audio portions and obtain a first probability score for each corresponding relationship between the obtained candidate word and the audio portion

**403:** Determine if the plurality of candidate words respectively match a plurality of key words of a key phrase and if the first probability score of each of the plurality of candidate words exceeds a corresponding first threshold, the plurality of candidate words constituting a candidate phrase

**404:** In response to determining the plurality of candidate words matching the plurality of key words and the each first probability score exceeding the corresponding threshold, obtain a second probability score representing a matching relationship between the candidate phrase and the key phrase based on the first probability score of each of the plurality of candidate words

**405:** In response to determining the second probability score exceeding a second threshold, determine the candidate phrase as the key phrase

# FIGURE 4A

410

**411:** Obtain a spectrogram corresponding to the audio

**412:** Obtain a feature vector for each time frame along the spectrogram to obtain a plurality of feature vectors corresponding to the spectrogram

**413:** Obtain a plurality of language units corresponding to the plurality of feature vectors

**414:** Obtain a sequence of candidate words corresponding to the audio based at least on a lexicon mapping language units to words, and for each candidate word, obtain the first probability score based at least on a model trained with sample sequences of language units

**415:** Obtain the plurality of candidate words from the sequence of candidate words

# FIGURE 4B

Internet

500

| Processor(s) 504 | | Microphone 512 | | Network Interface(s) 518 |

Bus 502

| Main Memory 506 | | ROM 508 | | Storage 510 |

# FIGURE 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150325240 A1